# EUROPÄISCHE PATENTSCHRIFT

(11) **EP 0 764 753 B1**
(45) Veröffentlichungstag und Bekanntmachung des Hinweises auf die Patenterteilung: **06.05.2004**
(21) Anmeldenummer: 95114679.4
(22) Anmeldetag: 18.09.1995
(51) Int. Cl.: E05F 11/06, F16C 1/26

(54) **Flexibles Gestänge mit flexiblem Zug und Haltern**
Flexible rod system with flexible tie-rod and supports
Tringlage flexible avec tirant flexible et supports

(43) Veröffentlichungstag der Anmeldung: 26.03.1997
(73) Patentinhaber: W. HAUTAU GmbH, D-31691 Helpsen (DE)
(72) Erfinder: Lahmann, Ernst, D-31715 Meerbeck (DE)
(74) Vertreter: Leonhard, Frank Reimund, Dipl.-Ing.

(56) Entgegenhaltungen:
- EP-A- 0 102 481
- EP-A- 0 239 984
- DE-A- 3 927 741

## Beschreibung

Die Erfindung betrifft ein flexibles Gestänge mit den Merkmalen des Oberbegriffs des Anspruchs 1 sowie einen flexiblen Zug für das flexible Gestänge.

"Flexible Gestänge" sind durch Benutzung der Öffentlichkeit zugänglich gemacht worden und dienen insbesondere zum Betätigen der Flügel von Oberlichtfenstern. Durch die über einen großen Teil der Länge des Gestänges vorhandene Flexibilität kann das Gestänge in seinem Verlauf der Kontur eines Rahmens von Fenster oder Tür leicht angepaßt werden, wobei der angepaßte Verlauf durch an dem Rahmen angebrachte Halter (Befestigungselemente) festgelegt werden kann, welche in entsprechend ausgebildeten Gegenkupplungsabschnitten die Kupplungsabschnitte von im wesentlichen steifen Hülsen formschlüssig aufnehmen, die mit den Enden einer flexiblen Hülle des flexiblen Zuges des Gestänges fest verbunden sind, in welcher Hülle das eigentliche Betätigungselement (die "Seele") längsverschieblich geführt ist.

Die **EP-A 239 984** beschreibt einen flexiblen Zug zum Einsatz in Kraftfahrzeugen. Dort wird das eine Ende des Zuges beschrieben als eine zylindrische Grundform, die einen Abschnitt (dort 4) mit größerem Außendurchmesser und einen weiteren kurzen Abschnitt aufweist, der der zylindrischen Grundform wieder entspricht. Am Ende des flexiblen Zuges entsteht also eine Reihenfolge von einer Ringnut, einem Ringbund und erneut eine Ringnut. Ein so geformtes Endstück eines flexiblen Zuges wird in einen Halter eingesetzt, der die entsprechende Gegenkontur hat (vgl. hierzu die dortige Figur 4). Als wesentlich wird in dieser Druckschrift auch beschrieben, daß die sich in dem Halter bildenden beiden zylindrischen Abschnitte (dort mit 4 und 5 bezeichnet) in einer bestimmten Länge erstrecken, um die korrespondierenden kurzen äußeren Ringnuten und den langgestreckten inneren Ringbund formschlüssig aufnehmen zu können.

Aus der dem Oberbegriff des Anspruchs 1 entsprechenden **DE-A 39 27 741** ist ein flexibler Zug der Öffentlichkeit zugänglich geworden, der an seinen beiden Enden entweder Ringbunde oder Ringnuten aufweist, also zwei identische Enden am flexiblen Zug hat (vgl. dort Figur 10 und Anspruch 7). Daraus würde sich ein identischer Halter ergeben (dort in Figur 6). Ein an der Innenwandung der erwähnten Halterung angeformter Nocken, der dort auch an einem über einen flexiblen Steg angelenkten Deckel angeordnet ist, kann die Ringnut an dem flexiblen Zug axial und radial befestigen. Identisch geformte Enden des flexiblen Zuges können also mit identischen Haltestücken lösbar befestigt werden.

Es ist häufig der Fall, teilweise auch notwendig, die Hülsen am Ende der flexiblen Züge mit **unterschiedlich** ausgebildeten Kupplungselementen zu versehen, mit der Folge, daß auch die Halter, die an dem Rahmen zum Beispiel festgeschraubt werden können, entsprechend unterschiedlich ausgebildete Gegenkupplungselemente aufweisen müssen, so daß zu jedem flexiblen Gestänge wenigstens zwei unterschiedlich ausgebildete Halter notwendig sind.

Es ist **Aufgabe der Erfindung**, hier Abhilfe zu schaffen und die Herstellung und die Vorratshaltung der aus Zug und Halter bestehenden Sets (flexible Gestänge) zu vereinfachen und zu verbilligen und auch die Anbringung des flexiblen Gestänges am Rahmen zu erleichtern.

Dieses wird mit Anspruch 1 oder 6 erreicht.

Die beiden Halter, die zu jedem flexiblen Gestänge (Anspruch 1) gehören, werden gleich ausgebildet und jedes der beiden Hülsen mit unterschiedlich ausgebildeten Kupplungselementen wird mit dem gleichen Halter, bzw. dessen Gegenkupplungsabschnitten, in formschlüssigen Eingriff gebracht. Dies erleichtert die Fertigung, da nur noch eine Sorte von Haltern hergestellt und auf Lager genommen werden muß. Es erleichtert auch die Montage, da nicht mehr darauf geachtet werden muß, welche Art von Kupplungselement des flexiblen Zuges an dem einen Ende und welches an dem anderen Ende zu liegen kommt. Der flexible Zug kann auch bei am Rahmen bereits festgelegten Haltern unter Vertauschung der Enden in entgegengesetzter Lage eingebaut werden, die Anbringung wird also vereinfacht. Der Monteur braucht auf die Lage und Richtung des "Flex-Gestänges" nicht mehr zu achten. Die abhängigen Ansprüche zeigen vorteilhafte Weiterbildungen des Anspruchs 1, unter anderem auch durch besondere Anpassung der einzelnen Gegenkupplungselemente, die einen Gegenkupplungsabschnitt in jedem Halter bilden.

Die gleich ausgebildeten Halter sollen die Lagerhaltung und den Einbau solcher flexibler Gestänge erleichtern. Das innere Gegenkupplungselement ist etwa halb so lang wie das äußere Kupplungselement. Das äußere Element besteht aus zwei U-Stegen, die das innere Element als nach oben offenen Spalt (Nut) definieren.

Bei den zuvor allgemein erwähnten Haltern handelt es sich in der Regel um solche, die aus Kunststoff nach einem der üblichen Verfahren hergestellt werden können. Sie sind in der Regel in Längsrichtung ihrer Aufnahme geteilt ausgebildet, so daß sie aus einem am Rahmen festleg-baren, zum Beispiel festschraubbaren, Unterteil und einem den Unterteil entsprechenden ergänzenden Deckelteil bestehen. Der innere Bereich der Aufnahme des Deckelteils ist dabei so ausgebildet, daß er die Aufnahme des Unterteils entsprechend ergänzt. Der Deckelteil kann durch einstückig angeformte flexible Gelenkabschnitte gelenkig und bleibend mit dem Unterteil verbunden sein, wobei auf der anderen Längsseite von Unterteil und Deckelteil miteinander zusammenwirkende Schnapp-elemente zum Verschließen der Aufnahme vorgesehen sein können.

Der erfindungsgemäße Zug (Anspruch 6) hat bei Beibehaltung der im Wesen unterschiedlichen Enden des Standes der Technik - allerdings bei Umformen der Art und des Aufbaus der unterschiedlichen Enden - eine Form, die in gleiche Halter einsetzbar ist, und zwar mit jedem Ende des Zuges. Ein Zug mit unsymmetrischen Enden des Standes der Technik ist dazu nicht in der Lage.

Die Erfindung wird nachfolgend anhand eines Beispiels näher erläutert.

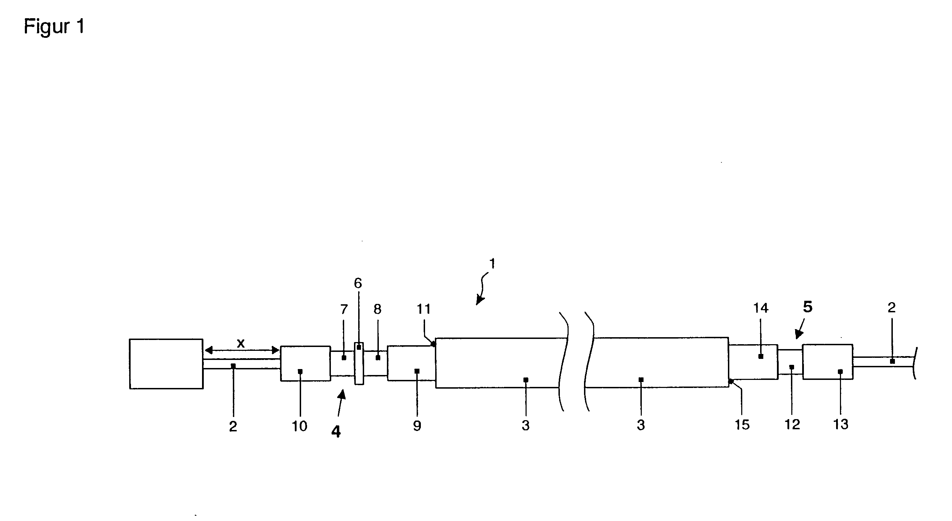

- **Figur 1**: ist ein flexibler Zug in Seitenansicht, und zwar ohne zugehörige Befestigungselemente (Halter).
- **Figur 2a**: ist ein Befestigungselement 20 bei geöffneter Aufnahme 27,27a in Draufsicht.
- **Figur 2b**: ist eine Ansicht in Längsrichtung des in Figur 2a gezeigten Unterteils des Befestigungselementes 20.
- **Figur 3**: ist im entsprechenden Maßstab wie Figur 2a ein Abschnitt des einen Hülsenelementes 5 des Zuges 1.
- **Figur 4**: ist in einer Darstellung wie Figur 3 ein Abschnitt des anderen Hülsenelementes 4 des Zuges 1.

Der flexible Zug 1 weist ein die Kraft in Betätigungsrichtung x übertragendes, über einen wesentlichen Teil seiner Länge flexibles inneres Betätigungselement 2 auf, das in einer - ebenfalls über einen wesentlichen Teil ihrer Länge - flexiblen Hülle 3 längsverschieblich ist. Mit den beiden Enden der Hülle 3 sind im wesentlichen steife Hülsen 4 und 5 fest verbunden.

Das eine Hülsenelement 4 weist zwei (linke) Längenabschnitte 9 und 10 von gleichem Durchmesser auf, an die Abschnitte 7 und 8 von reduziertem Durchmesser angrenzen, welche beiderseits eines Ringbundes 6 von größerem Durchmesser liegen.

Das andere Hülsenelement 5 weist den linken Abschnitten 9 und 10 entsprechende rechte Längenabschnitte 13 und 14 auf, die zwischen sich eine Ringnut 12 begrenzen.

Ein flexibler Zug 1 mit zumindest zwei Haltern 20 bildet ein "flexibles Gestänge".

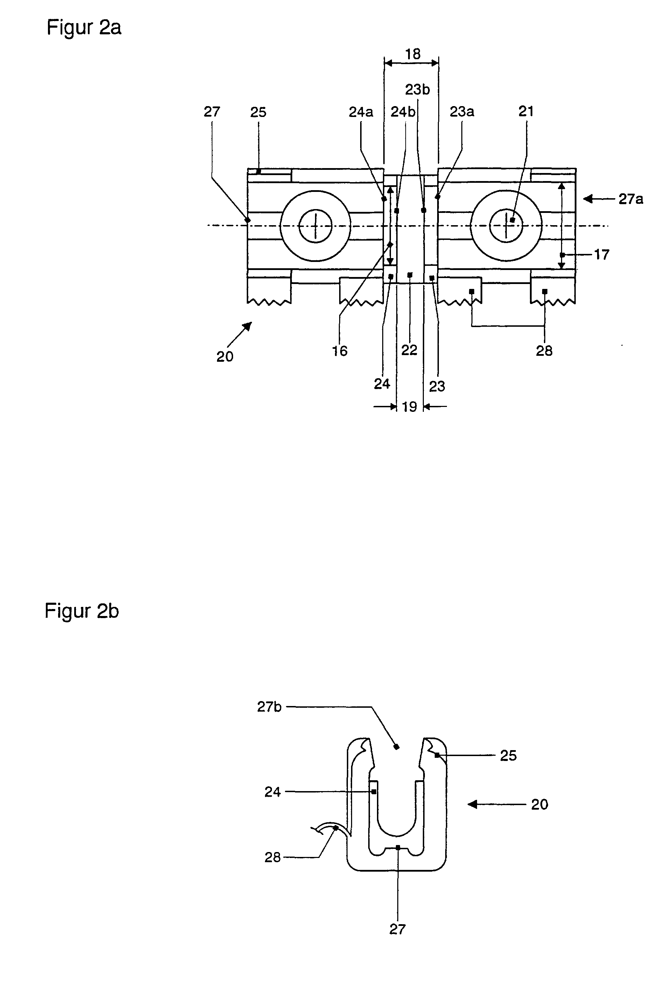

In Figur 2a ist das jedes Ende der Hülle 3 haltende Befestigungselement 20 gezeigt, wobei zum besseren Verständnis auch die Stirnansicht nach **Figur 2b** herangezogen werden kann. In den Figuren 2 ist nur der Unterteil des Befestigungselementes 20 gezeigt, während der entsprechend ausgebildete zugehörige Deckelteil über flexible Gelenkabschnitte 28 mit dem Unterteil verbunden ist, jedoch nicht dargestellt ist.

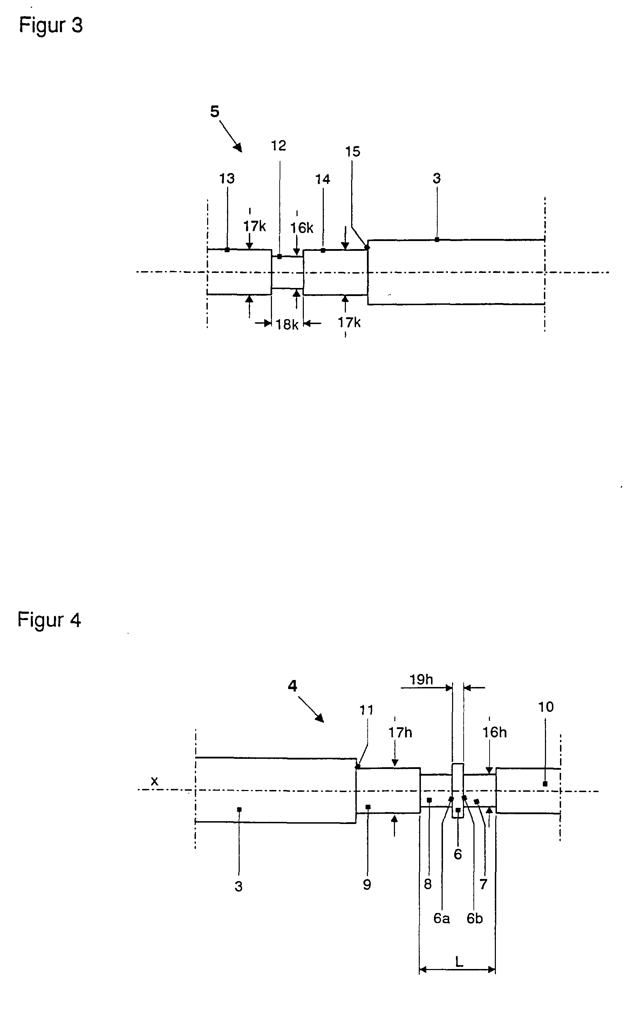

Das Befestigungselement 20 nach **Figur 2a** weist eine in Längsrichtung verlaufende Aufnahme 27,27a auf. Die lichte Weite 17 der Aufnahme entspricht im wesentlichen dem Durchmesser 17k oder 17h der entsprechenden Abschnitte 13,14 bzw. 9,10 der Hülsenelemente 5 bzw. 4 aus Figuren 3 und 4, wobei im Bereich des offenen Endes 27b der Aufnahme 27 der Durchmesser verringert ist, so daß die Hülsen 4,5 schnappartig in der Aufnahme des Befestigungselementes 20 aufgenommen werden können.

Am Boden der Aufnahme 27,27a sind Öffnungen 21 für Befestigungsschrauben vorgesehen.

Etwa mittig der Aufnahme 27,27a sind im vorbestimmten gegenseitigen Abstand quer zur Längsrichtung der Aufnahme angeordnete Querstege 23 und 24 vorgesehen, die U-förmige Gestalt haben. Deren lichte Weite 16 senkrecht zur Betätigungsrichtung x entspricht der lichten Weite 16k des Grundes der Nut 12 des Hülsenelementes 5 bzw. der lichten Weite 16h der beiderseits des Ringbundes 6 angeordneten (eingedrehten) Nuten 7,8 des Hülsenelementes 4. Diese Abschnitte können wahlweise nahezu spielfrei in die ringartige Öffnung der Ringstege 23,24 eingreifen.

Die einander zugewandten Seiten 23b,24b der Stege 23,24 bilden einen Spalt 22 von der Länge 19, die der Länge 19h des Ringbundes 6 des Hülsenelementes 4 entspricht. Die voneinander abweisenden Seiten 23a und 24a der beiden Stege 23 und 24 besitzen einen in Betätigungsrichtung x liegenden Abstand 18, der der Länge 18k der Ringnut 12 des Hülsenelementes 5 entspricht.

Es ist ersichtlich, daß die Hülsenelemente 4 und 5 wahlweise in das gleiche Befestigungselement 20 nach **Figuren 2a,2b** formschlüssig eingesetzt werden können, um das zugehörige Ende 11 bzw. 15 der Hülle 3 des flexiblen Zuges 1 am Rahmen festzulegen.

Greift das Hülsenelement 4 ein, so kommt der Ringbund 6 formschlüssig in dem Spalt 22 zwischen den Stegen 23 und 24 zu liegen, wobei die eingedrehten Abschnitte 7 und 8 praktisch spielfrei in die durch die Stege 23 und 24 gebildeten Öffnungen eingreifen. Die anschließenden Hülsenabschnitte 9 und 10 liegen mehr oder weniger formschlüssig und spielfrei als Biegeentlastung und zur Längsausrichtung in der Aufnahme 27,27a, wobei sie unter Schnappwirkung darin aufgenommen werden. Die Haltekraft wird von den nach innen weisenden Seiten 24b,23b auf die nach außen weisenden Schultern 6a,6b des Bundes 6 aufgebracht.

Greift das Hülsenelement 5 ein, so bewirken die nach außen zeigenden Seiten 24a, 23a eine in x-Richtung gerichtete Haltekraft an den nach innen weisenden Schultern der Nut 12.

Der Deckel ergänzt das Unterteil entsprechend und weist somit zumindest die den U-Stegen 24 entsprechenden Reststege auf seiner Innenseite auf. Außerdem weist der Deckelteil schnappartige Verriegelungselemente auf, die mit den Verriegelungsabschnitten 25 an den Enden des Unterteils zusammenwirken, um den Deckelteil unter Verschließen der Aufnahme am Unterteil festzulegen.

In einem geänderten - nicht bildlich dargestellten Ausführungsbeispiel - ist der Ringbund 6 an dem einen Ende der flexiblen Betätigung (flexiblem Gestänge) mit einem Durchmesser versehen, der in etwa dem Durchmesser der Halteabschnitte 9,10 dieses Endes entspricht. Eine Änderung des Halters 20 ist nicht erforderlich, er sieht ebenso aus, wie in der **Figur 2a und 2b** gezeichnet. Je größer der Durchmesser des Ringbundes 6 wird, desto höhere Haltekräfte vermag der Ringbund 6 bei seinem formschlüssigen Eingreifen in den Spalt 22 zwischen den haltenden U-Stegen 23,24 aufzubringen. In der Praxis kann eine entsprechende Anpassung des Durchmessers anwendungsbedingt vorgesehen werden.

Einen Vergleich der beiden Hülsen 4,5 der beiden Enden des Flexgestänges 1 zeigt, daß der Durchmesser der Abschnitte 9,10 und 13,14 identisch ausgebildet sein kann und die Nut 12 sowie die beiden Nuten 7,8 mechanisch auf ein Maß eingedreht werden können, das gerade noch nicht so gering im Durchmesser ist, daß die Innenseele 2 oder die sie umgebende, langgestreckte Führungs- und Gleitschicht verletzt wird. Ist der Bund 6 nicht erhaben in seinem Durchmesser gegenüber den Abschnitten 10,9, so ergibt er sich von allein, wenn die Nuten 7,8 geringfügig beabstandet sind, wobei der Abstand 19h an den (19) der Aufnahme 27 in ihrer axialen Erstreckung x angepaßt ist.

Dieser Fertigungsvorgang ist besonders einfach und deshalb kostengünstig. Ein flexibles Gestänge, das bislang eine unsymmetrische Struktur hatte, auf der einen Seite 4 nur einen Ringbund 6 und auf der anderen Seite 5 nur eine Ringnut 12, kann durch Eindrehen oder Einprägen von zwei zusätzlichen Nuten 7,8 beidseits des schon vorhandenen Ringbundes 6 zu einem universelleren Gestänge umgebildet werden, das keine verschiedene Halteböcke 20 mehr benötigt, sondern trotz seiner weiterhin vorhandenen Unsymmetrie in identische Halteböcke eingesetzt werden kann. Dabei spielt es auch keine Rolle, welcher Halteabschnitt 4,5 in welchen Haltebock 20 eingreift; das Gestänge muß nicht mehr gekennzeichnet werden, welches Ende an einem Hebel und welches Ende in einer Ausstellschere zur Verbindung von Hebel und Ausstellschere eingefügt werden muß.

Im Ausführungsbeispiel ist erkennbar, daß die haltenden Schultern des Ringbunds 6 die nach außen weisenden Schultern sind, daß aber die haltenden Schultern der Ringnut 12 die nach innen weisenden Schultern sind. Die nach innen weisenden Schultern der beiden Ringnuten. 7,8 an der Hülse 4 haben keine Haltefunktion, ihr Abstand L kann beliebig gewählt werden, mithin kann die Breite der Nuten 7,8 beliebig sein, sie sollte aber größer sein, als die Länge 18k der Nut 12, um nicht eine mechanische Überbestimmung bei dem Einsetzen in ein Lagerbock 12 zu erhalten, wenn mehr als zwei Schultern Haltefunktion übernehmen.

Der Abstand 18 der nach außen weisenden Schultern der Stege 23,24 ist also so gewählt, daß er sichtbar kleiner ist als der Abstand L der nach innen weisenden Schultern der Nuten 7,8.

Obwohl die Enden 4,5 des Zuges 1 unsymmetrisch sind, auch unsymmetrisch hinsichtlich ihrer Nutabmessungen und der entsprechenden eingreifenden Schultern der Nut 12 und des Bundes 6, passen diese unsymmetrischen Enden in identische Lagerböcke 20, von denen einer in der **Figur 2a** in Aufsicht und in der Stirnansicht in der **Figur 2b** gezeigt ist. Ein nur kleiner Eingriff durch ein Eindrehen von zwei zusätzlichen Nuten 7,8 an einem Ende - in der einen Hülse 4 - führt bei ansonsten beizubehaltender Fertigung zu dem großen Vorteil, daß nur noch eine Sorte Lagerböcke 20 benötigt werden und zusätzlich der langgestreckte Zug 1 des flexiblen Gestänges umkehrbar wird.

Das technische Gebiet der Erfindung sind flexible Gestänge zur Betätigung von Flügeln von Fenstern, Türen, insbesondere für Oberlichtflügel, bestehend aus einem - wenigstens über einen wesentlichen Teil seiner Länge - flexiblen Betätigungselement (2), das in einer - wenigstens über einen entsprechenden Längenbereich - flexiblen Hülle (3) längsverschieblich ist; aus an den beiden Enden der Hülle (3) fest angebrachten, steifen Hülsenelementen (4,5), die unterschiedlich ausgebildete Kupplungsabschnitte (6,12) aufweisen, und aus einem am Blendrahmen befestigbaren Halter oder Befestigungselement (20) für jedes Hülsenelement (4,5), welches Befestigungselement (20) jeweils eine Aufnahme (27,27a) für eine vorbestimmte Länge des betreffenden Hülsenelementes (4,5) und jeweils einen Gegenkupplungsabschnitt (22-24) zur formschlüssigen Aufnahme des betreffenden Kupplungsabschnittes (6-8,12) aufweist. Um die Herstellung und die Vorratshaltung der aus Zug und Halter (Befestigungselementen) bestehenden Sets (flexible Gestänge) zu vereinfachen und zu verbilligen und auch die Anbringung des flexiblen Gestänges am Rahmen zu erleichtern, wird vorgeschlagen, die Halter oder Befestigungselemente (20) für die beiden Hülsenelemente (4,5) gleich auszubilden.

## Patentansprüche

1. **Flexibles Gestänge** zur Betätigung von Flügeln von Fenstern, Türen, insbesondere für Oberlichtflügel, bestehend aus einem, wenigstens über einen wesentlichen Teil seiner Länge flexiblen Betätigungselement (2), das in einer, wenigstens über einen entsprechenden Längenbereich flexiblen Hülle (3) längsverschieblich ist und mit an den beiden Enden der Hülle (3) fest angebrachten, steifen Hülsen (4,5), die je einen Kupplungsabschnitt (6-8,12) aufweisen, und aus einem am Blendrahmen befestigbaren Halter (20) für jede Hülse (4,5), welcher Halter (20) jeweils eine Aufnahme (27,27a) für eine vorbestimmte Länge der betreffenden Hülsen (4,5) und jeweils einen Gegenkupplungsabschnitt (22-24) zur formschlüssigen Aufnahme des betreffenden Kupplungsabschnittes (6-8,12) aufweist, wobei die Halter (20) für die beiden Hülsen (4,5) gleich ausgebildet sind (22-24);
***dadurch gekennzeichnet, daß***
der eine Kupplungsabschnitt ein Ringbund (6) und der andere eine Ringnut (12) ist, und in der Aufnahme (27,27a) der Halter (20) jeweils zur Längsrichtung (x) der Aufnahme quer verlaufende, U-förmige Stege (23,24) vorgesehen sind, die gemeinsam die Gegenkupplungsabschnitte (22-24) bilden, die in den Haltern (20) an beiden Enden der Hülle (3) identisch sind;
wodurch die Kupplungsabschnitte ungleich ausgebildet sind.

2. Gestänge nach Anspruch 1, bei dem die am weitesten auseinanderliegenden Schultern der Kupplungsabschnitte (7,8; 12) an beiden Enden der Hülle (3) in den Hülsen (4,5) spürbar bis deutlich verschiedenen Abstand (18k,L) haben.

3. Gestänge nach Anspruch 1, ***dadurch gekennzeichnet*,**
**daß** die zwei zueinander parallelen, Stege (23,24) mit den einander zugewandten Seiten (23b,24b) einen ringförmigen Spalt (22) als ein Gegenkupplungselement für den Ringbund (6) und mit ihren voneinander abgewandten Seiten (23a,24a) ein Gegenkupplungselement für die Ringnut (12) bilden.

4. Gestänge nach Anspruch 3, ***dadurch gekennzeichnet*,**
**daß** die eine Hülse (4) beiderseits ihres Ringbundes (6) auf einen Durchmesser (16h) gleich dem Durchmesser (16k) des Grundes der Ringnut (12) der anderen Hülse (5) bzw. gleich dem Durchmesser der lichten Weite (16) der U-förmigen Stege (23,24) reduziert ist.

5. Gestänge nach einem der vorigen Ansprüche, bei dem die Halter (20) hinsichtlich ihrer Gegenkupplungsabschnitte (22;23,24) für die ungleichen Kupplungsabschnitte (6,7,8;12) an den Hülsen (4,5) gleich sind.

6. **Flexibler Zug** (1) für ein flexibles Gestänge nach einem der Ansprüche 1 bis 5, bei dem
(a) an den Enden einer weitgehend flexiblen Hülle (3) Hülsen (4,5) angebracht sind, die im wesentlichen rotationssymmetrische Kupplungsabschnitte (6,7,8;12) tragen;
(b) an der einen Hülse (5) eine erste Ringnut (12) mit einer ersten Länge (18k) als erster Kupplungsabschnitt eingebracht ist;
(c) an der anderen Hülse (4) zwei beabstandete zweite Ringnuten (7,8) mit einem zwischenliegenden Ringbund (6) vorgesehen sind, wobei der Abstand (L) der nach innen zum Ringbund (6) weisenden Schultern der zweiten Ringnuten (7,8) größer ist, als die Länge (18k) der ersten Ringnut (12);
wodurch die Kupplungsabschnitte ungleich ausgebildet sind.

## Claims

1. Flexible rod for actuating casements of windows, doors, in particular for skylight casements, consisting of an actuating element (2) which is flexible at least over a considerable part of its length, and which is longitudinally displaceable in a cover (3) which is flexible at least over a corresponding length region and with rigid sleeves (4, 5) firmly attached to the two ends of the cover (3), and which have in each case a coupling section (6-8, 12), and of a mount (20), which can be attached to the frame, for each sleeve (4, 5), which mount (20) has in each case a recess (27, 27a) for a predetermined length of the relevant sleeves (4, 5) and in each case a counter-coupling section (22-24) for positive receiving of the relevant coupling section (6-8, 12), wherein the mounts (20) for the two sleeves (4, 5) are designed to be equal (22-24); **characterised in that** the one coupling section is an annular collar (6) and the other an annular groove (12), and U-shaped bars (23, 24) , which together form the counter-coupling sections (22-24) which are identical in the mounts (20) at both ends of the cover (3), are provided in the recess (27, 27a) of the mounts (20) running in each case transversely to the longitudinal direction (x) of the recess;
as a result of which the coupling sections are designed to be unequal.

2. Rod according to claim 1, in which the shoulders of the coupling sections (7, 8; 12) lying furthest apart at both ends of the cover (3) in the sleeves (4, 5) have perceptible to significantly different distance (18k, L).

3. Rod according to claim 1, **characterised in that** the two bars (23, 24) parallel to one another form, with the sides (23b, 24b) facing one another, an annular gap (22) as a counter-coupling element for the annular collar (6) and, with their sides (23a, 24a) facing away from one another, a counter-coupling element for the annular groove (12).

4. Rod according to claim 3, **characterised in that** the one sleeve (4) on both sides of its annular collar (6) is reduced to a diameter (16h) equal to the diameter (16k) of the base of the annular groove (12) of the other sleeve (5) or equal to the diameter of the internal width (16) of the U-shaped bars (23, 24).

5. Rod according to one of the previous claims, in which the mounts (20) are equal with regard to their counter-coupling sections (22; 23, 24) for the unequal coupling sections (6, 7, 8; 12) on the sleeves (4, 5).

6. Flexible mover (1) for a flexible rod according to one of claims 1 to 5, in which
(a) sleeves (4, 5), which support essentially rotationally symmetrical coupling sections (6, 7, 8; 12), are attached to the ends of a largely flexible cover (3);
(b) a first annular groove (12) with a first length (18k) as first coupling section is introduced on the one sleeve (5);
(c) two spaced second annular grooves (7, 8) with an intermediate annular collar (6) are provided on the other sleeve (4), wherein the distance (L) of the shoulders of the second annular grooves (7, 8) pointing inwardly towards the annular collar (6) is greater than the length (18k) of the first annular groove (12);
as a result of which the coupling sections are designed to be unequal.

## Revendications

1. Tringlerie flexible, destinée à l'actionnement de vantaux de fenêtres, de portes, et notamment de vantaux d'imposte, et consistant en un élément d'actionnement (2), qui est flexible sur au moins une partie essentielle de sa longueur, qui est logé de manière à pouvoir se déplacer logitudinalement, dans une gaine (3) flexible au moins sur une étendue longitudinale correspondante, et qui comporte des manchons (4, 5) rigides et solidement fixés aux deux extrémités de la gaine (3), ces manchons présentant chacun une partie d'accouplement (6 à 8, 12), la tringlerie comprenant également un support (20), qui peut être fixé sur la traverse dormante, pour chaque manchon (4, 5), lequel support (20) présente chaque fois un logement (27, 27a) prévu pour une longueur prédéterminée des manchons (4, 5) correspondants, et chaque fois une partie d'accouplement inverse (22 à 24) pour recevoir par engagement positif la partie d'accouplement (6 à 8, 12) correspondante, les supports (20) pour les deux manchons (4, 5) étant réalisés identiques (22 à 24) ;
**caractérisée en ce que**
l'une des parties d'accouplement est une collerette annulaire (6), tandis que l'autre des parties est une rainure annulaire (12), et **en ce qu'**il est prévu, dans le logement (27, 27a) ménagé dans les supports (20), des barrettes en forme de U (23, 24), qui s'étendent chaque fois transversalement au sens longitudinal (x) du logement et qui constituent ensemble les parties d'accouplement inverse (22 à 24), qui sont identiques dans les supports (20) au niveau des deux extrémités de la gaine (3) ;
si bien que les parties d'accouplement sont réalisées différentes.

2. Tringlerie selon la revendication 1, dans laquelle les épaulements les plus éloignés l'un de l'autre des parties d'accouplement (7, 8 ; 12), situées au niveau des deux extrémités de la gaine (3) dans les manchons (4, 5), ont un écartement (18k, L) différent, de décelable à très net.

3. Tringlerie selon la revendication 1, **caractérisée en ce que** les deux barrettes (23, 24), parallèles l'une à l'autre, constituent, par leurs côtés (23b, 24b) dirigés l'un vers l'autre, un interstice annulaire (22) en tant qu'élément d'accouplement inverse pour la collerette annulaire (6) et, par leurs côtés (23a, 24a) dirigés à l'opposé l'un de l'autre, elles constituent un élément d'accouplement inverse pour la rainure annulaire (12).

4. Tringlerie selon la revendication 3, **caractérisée en ce qu'**un manchon (4) est réduit, de part et d'autre de sa collerette annulaire (6), à un diamètre (16h), qui est égal au diamètre (16k) du fond de la rainure annulaire (12) de l'autre manchon (5), ou bien égal au diamètre de la largeur de passage (16) des barrettes en forme de U (23, 24).

5. Tringlerie selon l'une des revendications précédentes, dans laquelle les supports (20) sont, en ce qui concerne leurs parties d'accouplement inverse (22 ; 23, 24) identiques pour les parties d'accouplement (6, 7, 8 ; 12) différentes au niveau des manchons (4, 5).

6. Tige flexible de tirage (1) destinée à une tringlerie flexible selon l'une des revendications 1 à 5, dans laquelle
(a) des manchons (4, 5) sont fixés aux extrémités d'une gaine (3) dans une large mesure flexible, et portent des parties d'accouplement (6, 7, 8 ; 12) sensiblement à symétrie de révolution ;
(b) une première rainure annulaire (12), ayant une première longueur (18k), est pratiquée en tant que première partie d'accouplement dans un manchon (5) ;
(c) des deuxièmes rainures annulaires (7, 8), distantes l'une de l'autre et avec, entre elles, une collerette annulaire (6), sont prévues au niveau de l'autre manchon (4), l'écartement (L) entre les épaulements, dirigés vers l'intérieur en direction de la collerette annulaire (6), des deuxièmes rainures annulaires (7, 8) étant plus grand que la longueur (18k) de la première rainure annulaire (12) ;
si bien que les parties d'accouplement sont réalisées différentes.
